# EUROPÄISCHE PATENTSCHRIFT

(11) **EP 0 630 354 B1**
(45) Veröffentlichungstag und Bekanntmachung des Hinweises auf die Patenterteilung: **13.11.1996**
(21) Anmeldenummer: 93905279.1
(22) Anmeldetag: 27.02.1993
(51) Int. Cl.: C01B 39/00, C01B 25/36, C01B 25/45, C01B 33/26, C09B 63/00

(54) **AZOFARBSTOFFE ENTHALTENDE MOLEKULARSIEBE**
MOLECULAR SIEVES CONTAINING AZO DYES
TAMIS MOLECULAIRES CONTENANT DES COLORANTS AZO QUES

(30) Priorität: 11.03.1992 DE 4207745
(43) Veröffentlichungstag der Anmeldung: 28.12.1994
(73) Patentinhaber: Hölderich, Wolfgang, Prof. Dr., D-67227 Frankenthal (DE)
(72) Erfinder: LAUTH, Guenter, D-6711 Grosskarlbach (DE); HOELDERICH, Wolfgang, D-6710 Frankenthal (DE); WAGENBLAST, Gerhard, D-6719 Weisenheim (DE); ALBERT, Bernhard, D-6701 Maxdorf (DE); LAMM, Gunther, D-6733 Hassloch (DE); REICHELT, Helmut, D-6730 Neustadt (DE); GRUND, Clemens, D-6800 Mannheim 24 (DE); GRUETTNER-MERTEN, Sabine, D-6704 Mutterstadt (DE)
(86) Internationale Anmeldenummer: EP9300459
(87) Internationale Veröffentlichungsnummer: WO9317965

(56) Entgegenhaltungen:
- DE-A- 4 126 461
- US-A- 3 950 180
- ANALYTICAL CHEMISTRY Bd. 63, Nr. 4, 15. Februar 1991, COLUMBUS US Seiten 348 - 351 R.D.PLACE ET AL.

## Beschreibung

Die vorliegende Erfindung betrifft neue kristalline Molekularsiebe, die bis zu einer Temperatur von 500°C thermisch stabil sind, enthaltend einen oder mehrere Chromophore aus der Klasse der Mono- oder Polyazofarbstoffe, die keine sauren Gruppen aufweisen, mit der Maßgabe, daß wenn der Chromophor einen Monoazofarbstoff aus der Azobenzolreihe darstellt, solche Farbstoffe ausgenommen sind, deren Kupplungskomponente aus der Diphenylaminreihe stammt, sowie deren Verwendung als Farbmittel.

Molekularsiebe finden in der Regel Anwendung als Adsorbentien, sowie als Katalysatoren oder als Katalysatorträger (Übersichtsartikel: L. Puppe und W. Büchner: "Zeolithe - Strukturen, Synthesen, Anwendungen", Naturwissenschaften 71, (1984), 192).

Die Adsorptionseigenschaften von Molekularsieben fanden bisher vor allem für kleinere Moleküle Anwendung. So kann z.B. die Adsorption von Wasser, Stickstoff oder auch Benzol zur Charakterisierung von Molekularsieben dienen. Dabei wird z.B. aus der Art des adsorbierten Moleküls und der Form der Adsorptionsisotherme auf Größe und Form der Mikroporen, porenvolumen, Phasenreinheit oder Anwesenheit von Mesoporen geschlossen (Beschreibung z.B. in D.W. Breck: "Zeolite Molecular Sieves, Structure, Chemistry and Use", J. Wiley, New York, 1974).

Die Adsorption der genannten Moleküle ist reversibel, d.h. durch geeignete Behandlung, z.B. Erhöhung der Temperatur, Erniedrigung des Druckes oder Anwendung eines Lösungsmittels, können die am Molekularsieb gebundenen Moleküle wieder unzerstört desorbieren. Diese Tatsache macht man sich in der Trennung von Stoffgemischen zu Nutze.

Die selektiven Adsorptionseigenschaften von Alumophosphaten werden z.B. der in EP-A-130 740 ausgenutzt, um ortho-substituierte Aromaten aus einem Isomerengemisch abzutrennen.

G. Meyer at al. beschreiben in Zeolites 4, (1984), 30, die "ship-in-the-bottle"-Synthese von Kobalt-, Nickel- oder Kupfer-Phthalocyaninen im Zeolith Faujasit. Durch Umsetzung des Übergangsmetall-ausgetauschten Zeoliths mit o-Phthalodinitril entsteht der Farbstoff in den ca. 12 Å großen Superkäfigen des Faujasits. Da diese Superkäfige nur durch ca. 7 bis 8 A große Öffnungen zu erreichen sind, kann zwar das o-phthalodinitril in die Hohlräume hineindiffundieren, ein Herausdiffundieren des synthetisierten Phthalocyanins ist aber wegen dessen Größe (ca. 12 bis 13 Å) aus sterischen Gründen nicht mehr möglich. Die Autoren sehen in dem eingelagerten Komplex einen heterogenisierten Homogenkatalysator.

Die Herstellung des Zeolithen Mordenit unter Zugabe von Triarylmethanfarbstoffen als Template wird in der EP-A-182 542 beschrieben. Als Vorteil der Methode wird angeführt, daß die Farbstoffe sich nach der Synthese nicht in den Molekularsiebporen befinden - im Gegensatz zum Verhalten der meisten Template. Deshalb ist ein Calcinieren, also Verbrennen der Template, überflüssig und weiterhin können die Farbstoff-Template nach der Synthese wiederverwendet werden.

Aus der US-A-4 018 870 sind Zeolithe bekannt, die basische Farbstoffe aus der Klasse der Triarylmethanfarbstoffe enthalten.

Weiterhin ist in Anal. Chem., Band 63, Seiten 348 bis 351, 1991, die Adsorption von 4-(Phenylazo)diphenylamin beschrieben.

Schließlich wird in der DE-A-3 625 693 vorgeschlagen, saure Farbstoffe mit Reaktivkomponenten in Gegenwart von säurebindenden Mitteln, z.B. von Zeolithen, zu kondensieren.

Aufgabe der vorliegenden Erfindung war es, Azofarbstoffe so fest in ein Molekularsiebgerüst einzulagern, daß aus den ursprünglich löslichen organischen Farbstoffen eine stabile Einschlußverbindung mit Pigmenteigenschaften entsteht, um so zu neuen Farbmitteln mit vorteilhaften anwendungstechnischen Eigenschaften zu gelangen.

Demgemäß wurden die eingangs näher bezeichneten kristallinen Molekularsiebe gefunden, die Azofarbstoffe enthalten.

Die in den Molekularsieben enthaltenen Azofarbstoffe stammen aus der Klasse der Mono- oder Polyazofarbstoffe, insbesondere aus der Klasse der Mono- oder Disazofarbstoffe, wobei Monoazofarbstoffe besonders hervorzuheben sind. Sie sind frei von sauren Gruppen. Saure Gruppen im erfindungsgemäßen Sinn sind z.B. der Hydroxysulfonyl- oder Carboxylrest.

Wenn der Chromophor einen Monoazofarbstoff aus der Azobenzolreihe und insbesondere generell einen Monoazofarbstoff darstellt, sollen solche Farbstoffe ausgenommen sein, deren Kupplungskomponente aus der Diphenylaminreihe stammen.

Geeignete Azofarbstoffe sind an sich bekannt und in großer Zahl beschrieben, z.B. in K. Venkataraman "The Chemistry of Synthetic Dyes", Vol. VI, Academic Press, New York, London, 1972.

Von besonderer Bedeutung sind Monoazofarbstoffe mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

Wichtige Monoazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe stammen.

Von besonderer Bedeutung sind Monoazofarbstoffe der Formel I

D-N=N-K (I),

in der
- D: für einen Rest der Formel 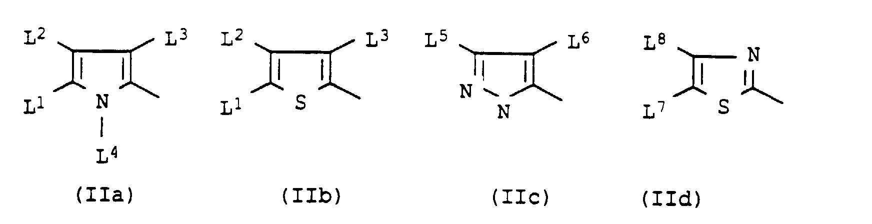 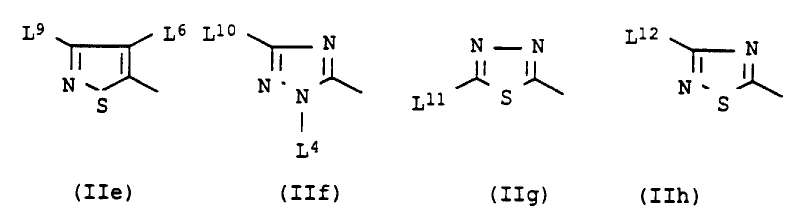 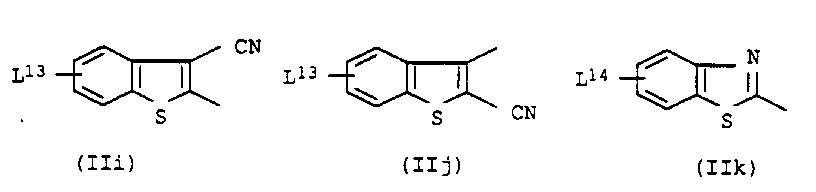 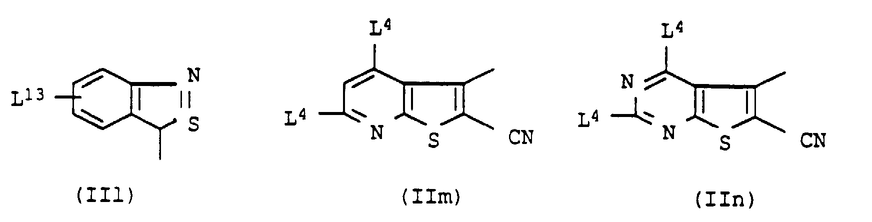 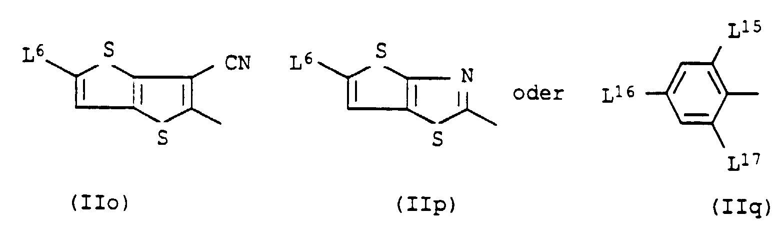 und
- K: für einen Rest der Formel 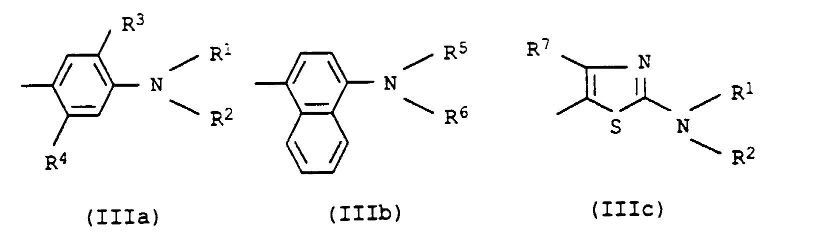 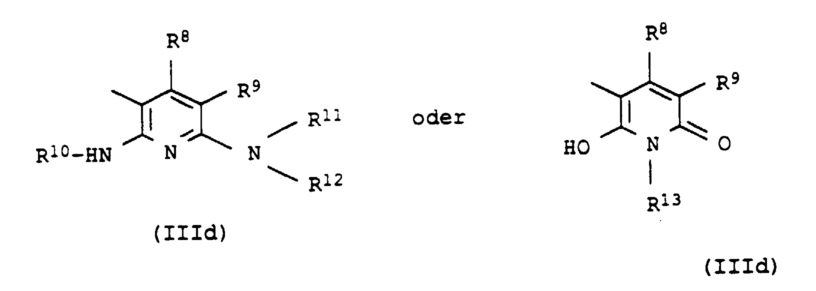
stehen, worin
- L¹: Nitro, Cyano, C₁-C₆-Alkanoyl, Benzoyl, C₁-C₆-Alkylsulfonyl, gegebenenfalls substituiertes Phenylsulfonyl oder einen Rest der Formel -CH=T, worin T die Bedeutung von Hydroxyimino, C₁-C₄-Alkoxyimino oder eines Restes einer CH-aciden Verbindung besitzt,
- L²: Wasserstoff, C₁-C₆-Alkyl, Halogen, Hydroxy, Mercapto, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₆-Alkylthio, gegebenenfalls substituiertes Phenylthio, C₁-C₆-Alkylsulfonyl oder gegebenenfalls substituiertes Phenylsulfonyl,
- L³: Cyano, C₁-C₄-Alkoxycarbonyl oder Nitro,
- L⁴: Wasserstoff, C₁-C₆-Alkyl oder Phenyl,
- L⁵: C₁-C₆-Alkyl oder Phenyl,
- L⁶: Wasserstoff, Cyano, C₁-C₄-Alkoxycarbonyl, C₁-C₆-Alkanoyl, Thiocyanato oder Halogen,
- L⁷: Nitro, Cyano, C₁-C₆-Alkanoyl, Benzoyl, C₁-C₄-Alkoxycarbonyl, C₁-C₆-Alkylsulfonyl, gegebenenfalls substituiertes Phenylsulfonyl oder einen Rest der Formel -CH=T, worin T die obengenannte Bedeutung besitzt,
- L⁸: Wasserstoff, C₁-C₆-Alkyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₆-Alkylthio, gegebenenfalls substituiertes Phenylthio, C₁-C₆-Alkylsulfonyl, gegebenenfalls substituiertes Phenylsulfonyl oder C₁-C₄-Alkoxycarbonyl,
- L⁹: Cyano, gegebenenfalls durch Phenyl substituiertes C₁-C₆-Alkyl, gegebenenfalls durch Phenyl substituiertes C₁-C₆-Alkylthio, gegebenenfalls substituiertes Phenyl, Thienyl, C₁-C₄-Alkylthienyl, Pyridyl oder C₁-C₄-Alkylpyridyl,
- L¹⁰: Phenyl oder Pyridyl,
- L¹¹: Trifluormethyl, Nitro, C₁-C₆-Alkyl, Phenyl, gegebenenfalls durch Phenyl substituiertes C₁-C₆-Alkylthio oder C₁-C₆-Dialkylamino,
- L¹²: C₁-C₆-Alkyl, Phenyl, 2-Cyanoethylthio oder 2-(C₁-C₄-Alkoxycarbonyl)ethylthio,
- L¹³: Wasserstoff, Nitro oder Halogen,
- L¹⁴: Wasserstoff, Cyano, C₁-C₄-Alkoxycarbonyl, Nitro oder Halogen,
- L¹⁵, L¹⁶ und L¹⁷: gleich oder verschieden sind und unabhängig voneinander jeweils Wasserstoff, C₁-C₆-Alkyl, C₁-C₆-Alkoxy, Halogen, Nitro, Cyano, C₁-C₄-Alkoxycarbonyl, C₁-C₆-Alkylsulfonyl oder gegebenenfalls substituiertes Phenylsulfonyl,
- R¹ und R²: gleich oder verschieden sind und unabhängig voneinander jeweils Wasserstoff, gegebenenfalls substituiertes C₁-C₆-Alkyl, das durch 1 oder 2 Sauerstoffatome in Etherfunktion unterbrochen sein kann, C₅-C₇-Cycloalkyl oder C₃-C₆-Alkenyl,
- R³: Wasserstoff, C₁-C₆-Alkyl oder C₁-C₆-Alkoxy,
- R⁴: Wasserstoff, C₁-C₆-Alkyl, C₁-C₆-Alkoxy, C₁-C₆-Alkylsulfonylamino, gegebenenfalls substituiertes C₁-C₆-Alkanoylamino oder Benzoylamino,
- R⁵ und R⁶: gleich oder verschieden sind und unabhängig voneinander jeweils Wasserstoff oder C₁-C₆-Alkyl,
- R⁷: Wasserstoff, gegebenenfalls substituiertes Phenyl oder Thienyl,
- R⁸: Wasserstoff oder C₁-C₆-Alkyl,
- R⁹: Cyano, Carbamoyl oder Acetyl,
- R¹⁰, R¹¹ und R¹²: gleich oder verschieden sind und unabhängig voneinander jeweils gegebenenfalls substituiertes C₁-C₁₂-Alkyl, das durch 1 bis 3 Sauerstoffatome in Etherfunktion unterbrochen sein kann, C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₆-Alkylsulfonyl oder gegebenenfalls substituiertes Phenylsulfonyl oder R¹¹ und R¹² zusammen mit dem sie verbindenden Stickstoffatom einen 5- oder 6-gliedrigen gesättigten heterocyclischen Rest, der gegebenenfalls weitere Heteroatome enthält, und
- R¹³: Wasserstoff oder C₁-C₆-Alkyl bedeuten.

Von besonderer Bedeutung sind auch Disazofarbstoffe der Formel IVa oder IVb 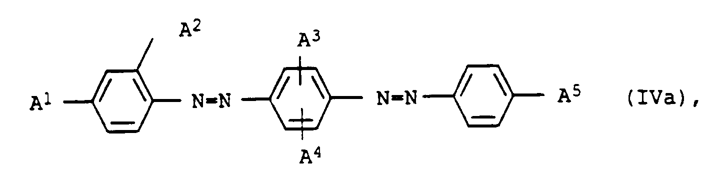 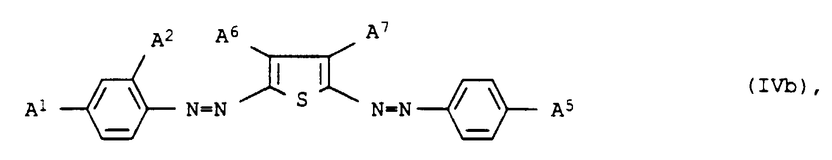 in der
- A¹: Wasserstoff, C₁-C₆-Alkyl, C₁-C₆-Alkoxy oder Nitro,
- A²: Wasserstoff oder Cyano
- A³ und A⁴: gleich oder verschieden sind und unabhängig voneinander jeweils Wasserstoff, C₁-C₆-Alkyl oder C₁-C₆-Alkoxy,
- A⁵: Wasserstoff, Hydroxy, C₁-C₆-Alkoxy, Amino oder gegebenenfalls durch Cyano substituiertes C₁-C₆-Mono- oder Dialkylamino,
- A⁶: Wasserstoff, Methyl oder Chlor und
- A⁷: Cyano oder C₁-C₄-Alkoxycarbonyl bedeuten.

Alle in den obengenannten Formeln auftretenden Alkyl- oder Alkenylgruppen können sowohl geradkettig als auch verzweigt sein.

Wenn in den obengenannten Formeln substituierte Phenylgruppen auftreten, können als Substituenten z.B. C₁-C₄-Alkyl, Chlor, Brom, Nitro oder C₁-C₄-Alkoxy in Betracht kommen. Die Phenylreste weisen dabei in der Regel 1 bis 3 Substituenten auf.

Wenn in den obengenannten Formeln substituierte Alkylgruppen auftreten, können als Substituenten z.B. Hydroxy, Cyclohexyloxy, Phenoxy, C₁-C₄-Alkoxycarbonyl, C₁-C₄-Alkanoyloxy, Cyano, Cyclohexyl oder Phenyl in Betracht kommen. Die Alkylreste weisen dabei in der Regel 1 oder 2 Substituenten auf.

Reste L², L⁴, L⁵, L⁸, L⁹, L¹¹, L¹², L¹⁵, L¹⁶, L¹⁷, R¹, R², R³, R⁴, R⁵, R⁶, R⁸, R¹⁰, R¹¹, R¹², R¹³, A¹, A³ und A⁴ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste L⁹ sind weiterhin z.B. Benzyl oder 1- oder 2-Phenylethyl.

Reste L², L⁸, L⁹ und L¹¹ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste L² und L⁸ sind weiterhin z.B. Phenylthio, 2-Methylphenylthio, 2-Methoxyphenylthio oder 2-Chlorphenylthio.

Reste A⁵ sind, wie weiterhin auch Reste L², L⁸, L¹⁵, L¹⁶, L¹⁷, R³, R⁴, A¹, A³ und A⁴, z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L⁶ sind, wie weiterhin auch Reste L², L⁸, L¹³, L¹⁴, L¹⁵, L¹⁶ und L¹⁷, z.B. Fluor, Chlor oder Brom.

Reste L⁷ sind, wie weiterhin auch Reste L¹, L², L⁸, L¹⁵, L¹⁶, L¹⁷, R¹⁰, R¹¹ und R¹², z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste L³ und A⁷ sind, wie weiterhin auch Reste L⁶, L⁷, L⁸, L¹⁴, L¹⁵, L¹⁶ und L¹⁷, z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste L² und L⁸ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste A⁵ sind weiterhin z.B. Methylamino, Ethylamino, Propylamino, Isopropylamino, Butylamino, Pentylamino, Hexylamino, 2-Cyanoethylamino oder Bis(2-cyanoethyl)amino.

Reste L¹¹ und A⁵ sind weiterhin z.B. Dimethylamino, Diethylamino, Dipropylamino, Diisopropylamino, Dibutylamino, Dipentylamino, Dihexylamino oder N-Methyl-N-ethylamino.

Reste L¹² sind weiterhin z.B. 2-Methoxycarbonylethylthio oder 2-Ethoxycarbonylethylthio.

Reste R¹, R², R¹¹, R¹² und R¹³ sind weiterhin z.B. Cyclopentyl, Cyclohexyl oder Cycloheptyl.

Reste L⁹ sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl, 2-, 3- oder 4-Methoxyphenyl, 2- oder 3-Methylthienyl oder 2-, 3- oder 4-Methylpyridyl.

Reste L¹, L⁶ und L⁷ sind weiterhin z.B. Formyl, Acetyl, Propionyl, Butyryl, Pentanoyl oder Hexanoyl.

Wenn L¹ oder L⁷ für den Rest -CH=T stehen, worin T sich von einer CH-aciden Verbindung H₂T ableitet, können als CH-acide Verbindungen H₂T z.B. Verbindungen der Formel 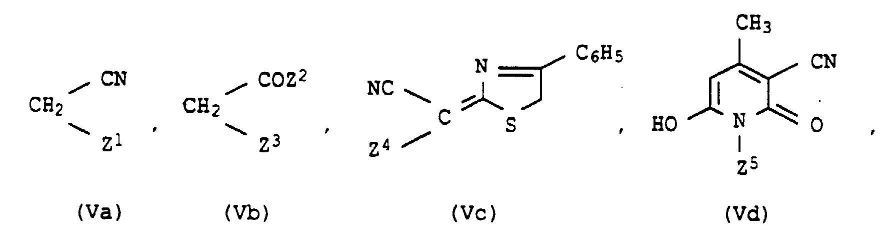 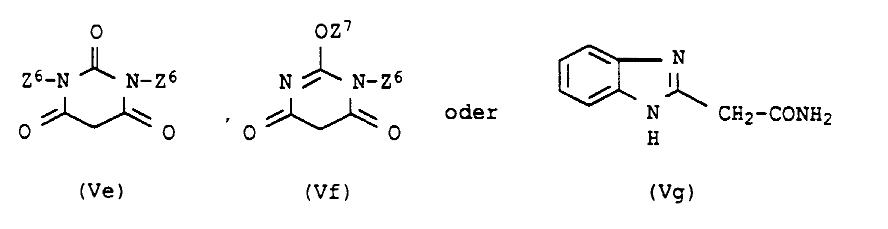 in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₄-Alkyl, C₁-C₄-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest der sich von Verbindungen der Formel Va, Vb oder Vc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest der sich von Verbindungen der Formel Va, Vb oder Vc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Reste R¹⁰, R¹¹ und R¹² sind weiterhin z.B. Heptyl, Octyl, 2-Ethylhexyl, Nonyl, Decyl, Undecyl, Dodecyl, 4,7-Dioxanonyl, 4,8-Dioxadecyl, 4,6-Dioxaundecyl, 3,6,9-Trioxaundecyl, 4,7,10-Trioxaundecyl oder 4,7,10-Trioxadodecyl.

Reste R¹, R², R¹⁰, R¹¹ und R¹² sind weiterhin z.B. 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 2-Hydroxyethyl, 3-Hydroxypropyl, 4-Hydroxybutyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Methoxycarbonylethyl, 2-Ethoxycarbonylethyl, 2- oder 3-Methoxycarbonylpropyl, 2- oder 3-Ethoxycarbonylpropyl, 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylalkyl, 2- oder 3-Cyclohexylpropyl, Benzyl, 1- oder 2-Phenylethyl, 2-Acetyloxyethyl, 2-Propionyloxyethyl, 2- oder 3-Acetyloxypropyl, Prop-2-en-1-yl, 2-Methyl-prop-2-en-1-yl, But-2-en-1-yl oder But-3-en-1-yl.

Wenn die Reste R¹¹ und R¹² zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Reste R¹⁰, R¹¹ und R¹² sind weiterhin z.B. Formyl, Acetyl, Propionyl, Butyryl, Isobutyryl, Pentanoyl, Hexanoyl, Heptanoyl, Octanoyl, 2-Ethylhexanoyl, Benzoyl, 2-, 3- oder 4-Methylbenzoyl, 2-, 3- oder 4-Methoxybenzoyl oder 2-, 3- oder 4-Chlorbenzoyl.

Wie eingangs schon erwähnt, sind die Azofarbstoffe an sich bekannt und z.B. in Venkataraman (loc. cit.), in der EP-A-201 896, DE-A-3 108 077, US-A-4 843 153 oder GB-A-1 546 803 oder in den älteren europäischen Patentanmeldungen 92 116 096.6 oder 92 119 335.5 beschrieben oder können nach den dort genannten Methoden erhalten werden.

Als Molekularsiebe für die Herstellung der erfindungsgemäßen Azofarbstoffe enthaltenden Molekularsiebe kommen Zeolithe oder Phosphate mit Zeolithstruktur, sogenannte "nicht zeolithische" Molekularsiebe (NZMS) zur Anwendung.

Zeolithe sind kristalline Aluminosilikate, die eine hochgeordnete Struktur mit einem starren dreidimensionalen Netzwerk von SiO₄- und AlO₄-Tetraedern besitzen, die durch gemeinsame Sauerstoffatome verbunden sind. Das Verhältnis der Silicium- und Aluminiumatome zu Sauerstoff beträgt 1 : 2 (siehe Ullmanns Encyclopädie der technischen Chemie, 4. Auflage, Band 24, Seite 575). Die Elektrovalenz der Aluminium enthaltenden Tetraeder ist durch Einschluß von Kationen in den Kristall, z.B. eines Alkali- oder Wasserstoffions, ausgeglichen. Ein Kationenaustausch ist möglich. Die Räume zwischen den Tetraedern sind vor der Dehydratisierung durch Trocknen oder Calcinieren von Wassermolekülen besetzt.

Die Zeolithe werden zumeist in der aciden H-Form oder neutralen Alkali-Form angewendet. In den Zeolithen können anstelle von Aluminium auch andere Elemente, wie Bor, Gallium, Eisen, Chrom, Vanadium, Arsen, Antimon, Wismut, Beryllium oder deren Gemische, in das Gitter eingebaut werden, oder das Silicium kann durch ein anderes vierwertiges Element, wie Germanium, Titan, Zirkonium oder Hafnium, ersetzt werden.

Entsprechend ihrer Struktur werden Zeolithe in verschiedene Gruppen unterteilt. So bilden bei der Mordenit-Gruppe Ketten oder bei der Chabasit-Gruppe Schichten aus Tetraedern die Zeolith-Struktur, während sich bei der Faujasit-Gruppe die Tetraeder zu Polyedern ordnen, z.B. in Form eines Kubooktaeders, der aus Vierringen bzw. Sechsringen aufgebaut ist. Je nach Verknüpfung der Kubooktaeder, wodurch unterschiedlich große Hohlräume und Poren entstehen, unterscheidet man Zeolithe vom Typ A, L, X oder Y.

Die den erfindungsgemäßen Stoffen zugrundeliegenden Molekularsiebe sind insbesondere Zeolithe aus der Mordenit-Gruppe oder Zeolithe vom Faujasit-Typ, z.B. Y-, X- oder L-Zeolithe.

In diese Gruppe von Zeolithen gehören auch die sogenannten "ultrastabilen" Zeolithe des Faujasittyps, d.h. dealuminierte Zeolithe. Verfahren zur Herstellung solcher Zeolithe sind z.B. beschrieben in "Catalysis by Zeolites" Band 5 aus "Studies in Surface Science and Catalysis" ed. B. Imelik et al. Elsevier Scientific Publishing Comp. 1980, S. 203; "Crystal Structures of Ultra-stable Faujasites" Advances in Chemistry Series Nr. 101, American Chemical Society Washington, DC, S. 226 ff (1971) oder in der US-A-4 512 961.

Vorteilhaft verwendet man auch Zeolithe vom Pentasiltyp. Diese haben als Grundbaustein einen aus SiO₄-Tetraedern aufgebauten Fünfring gemeinsam. Sie sind durch ein hohes SiO₂/Al₂O₃-Verhältnis gekennzeichnet sowie durch Porengrößen, die zwischen denen der Zeolithe vom Typ A und denen vom Typ X oder Y liegen.

Diese Zeolithe können verschiedene chemische Zusammensetzungen aufweisen. Es handelt sich hierbei um Alumino-, Boro-, Eisen-, Beryllium-, Gallium-, Chrom-, Arsen-, Antimon- oder Wismutsilikatzeolithe oder deren Gemische oder um Alumino-, Boro-, Gallium- oder Eisengermanatzeolithe oder deren Gemische. Der Aluminosilikatzeolith wird z.B. aus einer Aluminiumverbindung, vorzugsweise Aluminiumhydroxid oder Aluminiumsulfat und einer Siliciumkomponente, vorzugsweise hochdispersem Siliciumdioxid, in wäßriger Aminlösung, insbesondere in Polyaminen, wie 1,6-Hexandiamin-, 1,3-Propandiamin- oder Triethylentetramin-Lösung, mit oder insbesondere ohne Alkali- oder Erdalkalizusatz bei 100 bis 220°C unter autogenem Druck hergestellt. Hierzu gehören auch die isotaktischen Zeolithe nach der EP-A-34 727 oder der EP-A-46 504. Die erhaltenen Aluminosilikatzeolithe weisen je nach Wahl der Ausgangsstoffmengen ein SiO₂/Al₂O₃-Verhältnis von 10:1 bis 40 000:1 auf. Derartige Aluminosilikatzeolithe kann man auch in etherischem Medium, z.B. in Diethylenglykoldimethylether, in alkoholischem Medium, z.B. in Methanol, Ethanol, Propanol, Isopropanol, Butanol, Ethan-1,2-diol, Butan-1,4-diol, Hexan-1,6-diol oder Polyolen, oder in Wasser synthetisieren.

Eisensilikatzeolithe erhält man z.B. aus einer Eisenverbindung, vorzugsweise Eisen(III)sulfat, und einer Siliciumverbindung, vorzugsweise hochdispersem Siliciumdioxid, in wäßriger Aminlösung, insbesondere 1,6-Hexandiamin, mit oder ohne Alkali- oder Erdalkalizusatz bei 100 bis 220°C unter autogenem Druck.

Zu den verwendbaren siliciumreichen Zeolithen (SiO₂/Al₂O₃ ≥ 10:1) gehören auch die sogenannten ZSM-Typen, Ferrierit, NU-1 oder Silicalit® (Firma Union Carbide/UOP) ein Molekularsieb, ein sogenannter Silica Polymorph.

Zeolithpulver kann man nach ihrer Herstellung einem Verformungsschritt unterwerfen. Hierdurch erhält man Formkörper unterschiedlicher Gestalt, Tabletten, Ringe, Stränge, Sterne oder Kleeblattformen. Zeolithe können nach ihrer Isolierung, Trocknung bei 100 bis 160°C, vorzugsweise 110°C, und Calcinierung bei 450 bis 550°C, vorzugsweise 500°C, mit einem Bindemittel im Gewichtsverhältnis 90 : 10 bis 40 : 60 zu Strängen oder Tabletten verformt werden. Als Bindemittel eignen sich verschiedene Aluminiumoxide, insbesondere Boehmit, amorphe Aluminosilikate mit einem SiO₂/Al₂O₃-Gewichtsverhältnis von 25 : 75 bis 90 : 5, insbesondere 75 : 25, Siliciumdioxid, insbesondere hochdisperses Siliciumdioxid, Gemische aus hochdispersem Siliciumdioxid und hochdispersem Aluminiumoxid, Titandioxid, Zirkon(IV)oxid sowie Ton. Nach der Verformung werden die Extrudate oder Preßlinge bei 110°C 16 Stunden getrocknet und bei 500°C 16 Stunden calciniert.

Man erhält auch geeignete Formkörper, wenn die isolierten Zeolithe direkt nach der Trocknung verformt werden und erst nach der Verformung einer Calcinierung unterworfen werden. Die hergestellten Zeolithe können auch in reiner Form, ohne Bindemittel, als Stränge oder Tabletten eingesetzt werden, wobei als Verstrangungs- oder Peptisierungshilfsmittel z.B. Ethylcellulose, Kartoffelstärke, Stearinsäure, Ameisensäure, Oxalsäure, Essigsäure, Salpetersäure, Ammoniak, Amine, Silikoester, Graphit oder deren Gemische verwendet werden können. Besonders jedoch werden die Zeolithe in Pulverform eingesetzt.

Liegen die Zeolithe aufgrund der Art der Herstellung nicht in der aciden H-Form vor, sondern z.B. in der Alkali- oder Erdalkali-Form, dann kann diese durch Ionenaustausch z.B. mit Ammoniumionen, und anschließende Calcinierung oder durch Behandlung mit Säuren vollkommen oder partiell in die gewünschte H-Form übergeführt werden.

Für die Herstellung der erfindungsgemäßen neuen Farbmittel kommen auch Phosphate als Molekularsiebe zur Anwendung. Es werden unter hydrothermalen Bedingungen synthetisierte Phosphate eingesetzt. Diese Phosphate besitzen Zeolithstruktur. Man unterscheidet AlPO's, SAPO's, ELAPO's, ELSAPO's und MeA-PO's sowie VPI-5 und Cloverite.

Derartige Phosphate werden im Übersichtsartikel E.M. Flanigen et al.: "Alumophosphate molecular sieves and the periodic table" Pure & Appl. Chem. Vol 58, S. 1351 bis 1358 (1986), beschrieben.

Aus der US-A-4 310 440 sind eine Vielzahl mikroporöser Alumophosphate (Kurzbezeichnung: ALPOs) bekannt. Danach werden diese hergestellt, indem als Ausgangskomponenten neben phosphor- und aluminiumhaltigen Verbindungen sogenannte Template (Strukturbildner) verwendet werden. Als Template kommen eine Vielzahl organischer Stickstoff-Verbindungen (z.B. Amine, Ammoniumverbindungen oder Stickstoff-Heterocyclen) in Betracht. Je nach Art des Templats und Reaktionsbedingungen sind viele verschiedene Aluminiumphosphatstrukturen herstellbar, die durch ihre unterschiedlichen Röntgenbeugungsdaten charakterisiert werden.

Die bekannten Alumophosphate unterscheiden sich in ihrem Aufbau des Hohlraumsystems, also in Porengröße, Porenvolumen und Oberfläche. Diese Unterschiede bedingen unterschiedliche Eigenschaften, wie Adsorptionskapazitäten, die Fähigkeit zur Trennung bestimmter Stoffe oder katalytische Aktivität.

Alumophosphate bestehen aus einem Kristallgitter, welches aus TO₄-Tetraedern aufgebaut ist, wobei als Tetraederatome T Phosphor und Aluminium auftreten. Im allgemeinen sind die Anzahl der AlO₄- und der PO₄-Tetraeder gleich, so daß das Kristallgitter keine Ladung trägt und daher auch keine ladungsausgleichenden Kationen vorhanden sind.

Mikroporöse Alumophosphate finden Anwendung als Adsorbentien, sowie als Katalysatoren oder als Katalysatorträger (Übersichtsartikel: E.M. Flanigen et al.: "Structural, synthetic and physicochemical concepts in aluminophosphate-based molecular sieves" in "Innovation in Zeolite Materials Science" P.J. Grobet et al. (Hrsg.), Elsevier, 1988, S. 13 bis 27).

Die unter hydrothermalen Bedingungen hergestellten Aluminiumphosphate sind z.B. ALPO-5, ALPO-8, ALPO-9, ALPO-11, ALPO-12, ALPO-14, ALPO-21, ALPO-25, ALPO-31, ALPO-33 oder MCM9. Synthesen dieser Verbindungen sind z.B. in der EP-A-132 708, US-A-4 310 440, oder in J. Am. Chem. Soc. 104, (1982), 1146, beschrieben.

Beispielsweise wird das AlPO₄-5 (APO-5) synthetisiert, indem man Orthophosphorsäure mit Pseudoboehmit in Wasser homogen mischt, zu dieser Mischung Tetrapropylammoniumhydroxid gibt und danach das Reaktionsgemisch bei ca. 150°C 20 bis 60 Stunden unter autogenem Druck in einem Autoklaven umsetzt. Das abfiltrierte AlPO₄ wird bei 100 bis 160°C getrocknet und bei 450 bis 550°C calciniert.

Die Herstellung von einem als ALPO-11 bezeichneten mikroporösen Alumophosphat wird in der US-A-4 310 440, Beispiele 32 bis 36 beschrieben. Danach wird die Verbindung synthetisiert, indem als Ausgangskomponenten Phosphorsäure, eine Aluminiumverbindung sowie ein Dialkylamin, z.B. Di-n-propylamin oder Diisopropylamin, verwendet werden. Die Mischung wird hydrothermal behandelt. Als Produkt entsteht zunächst ein mikroporöses Alumophosphat, dessen Poren mit dem Templat gefüllt sind. Durch Calcinieren dieser Verbindung läßt sich das Templat entfernen.

AlPO₄-9 (APO-9) wird ebenfalls aus Orthophosphorsäure und Pseudoboehmit aber in wäßriger DABCO-Lösung (1,4-Diazabicyclo-(2,2,2)octan) bei ca. 200°C unter autogenem Druck während 200 bis 400 h synthetisiert.

Die Synthese des AlPO₄-21 (APO-21) erfolgt aus Orthophosphorsäure und Pseudoboehmit in wäßriger Pyrrolidon-Lösung bei 150 und 200°C unter autogenem Druck während 50 bis 200 Stunden.

Nach der US-A-4 440 871 ist es möglich, in das Kristallgitter dieser Alumophosphate zusätzlich Silicium einzulagern, wodurch man zu den Silicoalumophosphaten (Kurzbezeichnung: SAPOs) gelangt.

Die Synthese der SAPOs verläuft in analoger Weise zu der der ALPOs, wobei zusätzlich eine Siliciumquelle zu dem Syntheseansatz gegeben wird. Die Ladung der im Kristallgitter der SAPOs enthaltenden AlO₄-, PO₄- und SiO₄-Tetraeder kompensieren sich im allgemeinen nicht, so daß sich ein geladenes Kristallgitter ergibt, dessen Ladung durch Gegenionen ausgeglichen sein muß.

Aus diesem Grund können SAPOs neben den schon bei den ALPOs erwähnten Anwendungen auch als Ionenaustauscher Verwendung finden. Weiterhin stellen SAPOs in ihrer H-Form feste Säuren dar, können demnach z.B. als Brönsted-acide Katalysatoren eingesetzt werden.

Geeignete Siliciumaluminiumphosphate sind z.B. SAPO-5, SAPO-8, SAPO-11, SAPO-31 oder SAPO-34. Die Synthese dieser Verbindungen wird z.B. in der EP-A-103 117 oder US-A-4 440 871 beschrieben. Diese Siliciumaluminiumphosphate besitzen Zeolithstruktur. SAPOs werden hergestellt durch Kristallisation aus wäßriger Mischung bei 100 bis 250°C und autogenem Druck während 2 Stunden bis 2 Wochen, wobei die Reaktionsmischung aus einer Silicium-, Aluminium- und Phosphorkomponente in wäßrigen aminoorganischen Lösungen umgesetzt wird.

SAPO-5 beispielsweise wird durch Mischen von Siliciumdioxid - suspendiert in wäßriger Tetrapropylammoniumhydroxid-Lösung - mit einer wäßrigen Suspension aus Pseudoboehmit und Orthophosphorsäure und anschließende Umsetzung bei 150 bis 200°C während 20 bis 200 Stunden unter autogenem Druck in einem Rührautoklaven erhalten. Die Trocknung des abfiltrierten Pulvers erfolgt bei 110 bis 168°C und die Calcinierung bei 450 bis 550°C.

Die Herstellung von einem als SAPO-11 bezeichneten mikroporösen Silicoalumophosphat wird in der US-A-4 440 871, Beispiele 15 bis 22, beschrieben und erfolgt in analoger Weise wie beim ALPO-11 beschrieben, wobei lediglich dem Reaktionsansatz zusätzlich eine reaktive Siliciumquelle zugegeben wird.

Die Struktur von ALPO-11 und SAPO-11 ist identisch und wurde beispielsweise von Bennett et al. (Zeolites, Vol.7, (1987) S. 160) beschrieben. Die Struktur ist unter der Bezeichnung AEL als Kristallstruktur bei Meier und Olson ("Atlas of Zeolite Structure Types" 2nd Ed., Butterworths, London, 1987) klassifiziert.

Als Siliciumaluminiumphosphate sind auch z.B. ZYT-5, ZYT-6, ZYT-7, ZYT-9, ZYT-11 oder ZYT-12 geeignet (JP-A-217 619/1984).

Zu den "nicht zeolithischen" Molekularsieben gehören auch die Phosphate z.B. Aluminiumphosphat und Siliciumaluminiumphosphat mit VPI-5 Struktur und der Cloverite (Galliumphosphat).

Das Aluminiumphosphat VPI-5 ist ein Molekularsieb mit gleichförmigen eindimensionalen Kanälen und extra großen Poren mit 18 Tetraederatomen und einem freien zugänglichen Durchmesser von etwa 12 Å. Die Herstellung dieser Substanz wird beispielsweise bei M.E. Davis et al. ACS-Symp. Ser. 398 (1989) S. 291 - 304 beschrieben. Hierbei wird wäßrige Phosphorsäure zu in Wasser suspendiertem Boehmit gegeben und nach einer Alterungsphase von 1,5 bis 2 Stunden unter Rühren wird n-Dipropylamin zugeführt. Diese Reaktionsmischung wird für 20 bis 24 Stunden bei 142 °C gerührt. Die Eigenschaften und Charakteristika dieser Materialien wird beispielsweise in J. Phys. Chem. 95 (1991) 1380, Zeolites 11 (1991) 583, J. Am. Chem. Soc. 111 (1989) 3919 beschrieben. Das siliciumhaltige Aluminiumphosphat mit VPI-5 Struktur ist ebenfalls bekannt und kann auch für die Herstellung der erfindungsgemäßen Verbindungen verwendet werden.

Beim Cloverite handelt es sich um ein kubisches Galliumphosphat-Molekularsieb mit einer Porenöffnung gebildet aus 20 Tetraederatomen und einem dreidimensionalen Kanalsystem. Der maximale Porendurchmesser beträgt ca. 14 Å. Der Superkäfig an den Schnittstellen der Kanäle hat einen Durchmesser von 29 bis 30 Å. Die Herstellung und Struktur dieses Materials ist beschrieben in Nature 352 (1991) S. 320 und S. 281. Auch dieses Galliumphosphat mit mikroporösem Kristallgefüge eignet sich für die Herstellung der erfindungsgemäßen Farbstoffe, insbesondere für den Einbau voluminöserer Moleküle.

Die so hergestellten Phosphate mit Zeolithstruktur können nach ihrer Isolierung, Trocknung bei 100 bis 160°C, vorzugsweise 110°C, und Calcinierung bei 450 bis 550°C, vorzugsweise 500°C, mit einem Bindemittel im Verhältnis 90 : 10 bis 40 : 60 Gew.-% zu Strängen, Tabletten, Kleeblättern, Ringen, Rädern oder Monolithen verformt werden. Als Bindemittel eignen sich diverse Aluminiumoxide, bevorzugt Boehmit, amorphe Aluminosilikate mit einem SiO₂/Al₂O₃-Gewichtsverhältnis von 25 : 75 bis 90 : 5, bevorzugt 75 : 25, Siliciumdioxid, bevorzugt hochdisperses Siliciumdioxid, Gemische aus hochdispersem Siliciumdioxid und hochdispersem Aluminiumoxid sowie Ton. Nach der Verformung werden die Extrudate oder Preßlinge bei 110°C 16 Stunden getrocknet und bei 500°C 16 Stunden calciniert.

Man erhält auch vorteilhaft Formkörper der verwendeten Molekularsiebe, wenn das isolierte Phosphat direkt nach der Trocknung verformt wird und erst nach der Verformung einer Calcinierung unterworfen wird. Die hergestellten Phosphate können in reiner Form, ohne Bindermittel, als Stränge oder Tabletten eingesetzt werden, wobei als Verstrangungs- oder Peptisierungshilfsmittel z.B. Ethylcellulose, Kartoffelstärke, Stearinsäure, Ameisensäure, Oxalsäure, Essigsäure, Salpetersäure, Ammoniak, Amine, Silikoester, Graphit oder deren Gemische verwendet werden.

Liegt das Phosphat z.B. Siliciumaluminiumphosphat aufgrund der Art seiner Herstellung nicht in der aciden H-Form vor, sondern z.B. in der Na-Form oder in anderer Alkali- oder Erdalkali-Form, dann kann diese durch Ionenaustausch z.B. mit Ammoniumionen, und anschließende Calcinierung oder durch Behandlung mit Säuren vollkommen oder partiell in die gewünschte H-Form übergeführt werden.

Die Porengröße der kristallinen Molekularsiebe liegt üblicherweise bei 4 bis 14 Å, vorzugsweise 5 bis 12 Å und insbesondere 5 bis 8 Å. Der maximale Durchmesser der Superkäfige der Molekularsiebe beträgt 29 bis 30 Å.

Bei den erfindungsgemäßen Stoffen stellt die Einlagerung der Azofarbstoffe keine übliche Adsorption dar, bei der das Adsorbens reversibel an das Adsorbat gebunden ist.

Die Verbindung zwischen Azofarbstoff und Molekularsieb ist in der Regel so stark, daß bei Energiezufuhr, z.B. Temperaturbehandlung, praktisch keine Desorption des Farbstoffs stattfindet. Bei relativ hohen Temperaturen tritt allenfalls eine Zersetzung des Azofarbstoffs ein. Dies ergibt sich durch die günstige Wahl der Abmessungen von Azofarbstoff und Molekularsiebporen sowie der chemischen Eigenschaften von Azofarbstoff und Molekularsieb (z.B. Hydrophilie oder Polarität), die zu sehr stabilen Einschlußverbindungen führt.

Um eine stabile Einlagerungsverbindung zu erhalten, müssen Azofarbstoff und Molekularsieb so gewählt werden, daß sie von ihren sterischen und elektronischen Eigenschaften her zusammenpassen.

Ein sehr großer Azofarbstoff wird z.B. gar nicht in das Porensystem eines engporigen Molekularsiebs eindringen können. Der Farbstoff würde bei der oben genannten Behandlung allenfalls auf der äußere Oberfläche des Molekularsiebs adsorbieren, von wo er bei der Endtemperatur der Behandlung wegsublimiert und/oder bei der Lösungsmittelbehandlung abgewaschen wird.

Ein sehr kleines Farbstoffmolekül wird zwar in ein weitporiges Molekularsieb gut hineinpassen; die Wechselwirkung zwischen Farbstoff und Molekularsieb wird aber in diesem Fall so schwach sein, daß ein Herauslösen des Azofarbstoffs, z.B. durch eine Soxhlet-Extraktion, relativ leicht möglich sein wird.

Das Molekularsieb immobilisiert den ursprünglich löslichen Farbstoff, so daß die Einlagerungsverbindung eine verbesserte Stabilität gegen Lösungsmittel besitzt. Das Molekularsiebgitter, in welchem der Azofarbstoff eingeschlossen ist, kann auch einen besseren Schutz gegen saure und alkalische Lösungen, sowie eine erhöhte Beständigkeit gegen über Temperatur und Strahlungseinflüsse bieten.

In der Regel enthalten die erfindungsgemäßen Stoffe 0,01 bis 20 Gew.-%, vorzugsweise 0,5 bis 15 Gew.-% und insbesondere 1 bis 10 Gew.-% an Azofarbstoff, jeweils bezogen auf das Gewicht des Molekularsiebs.

Die Einlagerung der Azofarbstoffe kann auf mehrere Arten erfolgen. Eine Möglichkeit besteht in der Behandlung einer Mischung aus üblicherweise calciniertem Molekularsieb und Azofarbstoff bei höherer Temperatur. Voraussetzung ist in der Regel ein sterisches und elektronisches Zusammenpassen von Farbstoffmolekül und Porensystem des Molekularsiebs.

Bei leicht sublimierbaren Azofarbstoffen empfiehlt es sich, die Behandlung im Vakuum vorzunehmen. Die Behandlung des Gemisches kann durch die Zugabe eines Lösungsmittels des Azofarbstoffes erleichtert werden.

Bei einer Ausführungsform dieser Methode wird die Mischung aus Azofarbstoff und Molekularsieb bei einem Druck von unter 1 bar, vorzugsweise unter 50 mbar, insbesondere unter 10 mbar und ganz besonders unter 1 mbar, auf eine Temperatur von 50 bis 300°C, bevorzugt 100 bis 250°C, erhitzt. Die Temperatur wird 0,1 bis 100 Minuten lang gehalten. Nach dieser Behandlung kann überschüssiger, d.h. nicht im Molekularsieb gebundener Farbstoff durch eine geeignete Behandlung, z.B. mittels Soxhlet-Extraktion, entfernt werden.

Eine weitere Möglichkeit der Herstellung der neuen Verbindungen ist die Synthese des Azofarbstoffs aus geeigneten Edukten, z.B. aus Diazo- und Kupplungskomponente, in Anwesenheit von calciniertem Molekularsieb. Dabei müssen die Eduktmoleküle von der Größe her so gewählt werden, daß sie in die Hohlräume der Molekularsiebe passen. Die Reaktionsbedingungen bei dieser Synthese sind so zu wählen, daß die Struktur des Molekularsiebs nicht zerstört wird.

Nach der Synthese des Azofarbstoffs in den Poren des Molekularsiebs wird überschüssiges Edukt und außerhalb der Poren gebildeter Azofarbstoff durch eine geeignete Behandlung, z.B. mit einem Lösungsmittel, entfernt.

Eine weitere Möglichkeit der Herstellung der Einschlußverbindung ist die Synthese des Molekularsiebs in Anwesenheit des Azofarbstoffs. Dazu werden zu einer üblichen Molekularsieb-Synthesemischung, welche z.B. aus einer Silicium- und gegebenenfalls einer Aluminiumquelle besteht, der Azofarbstoff und gegebenenfalls ein weiteres Templat gegeben. Die Mischung wird bei einer Temperatur von 100 bis 250°C hydrothermal in einem Autoklaven behandelt. Das entstandene Produkt wird abfiltriert und mit geeigneten Lösungsmitteln zur Entfernung von nicht umgesetzten Edukten behandelt.

Im Gegensatz zu der in der EP-A-182 542 beschriebenen Methode zur Herstellung von Mordenit mit Farbstoffen im Syntheseansatz bleibt der Azofarbstoff als Templat nach der Synthese im Porensystem des Molekularsiebs erhalten.

Die Einschlußverbindungen unterscheiden sich oft schon in der Farbe von dem ursprünglichen Azofarbstoff und dem Molekularsieb.

Diese Unterschiede können durch UV- oder Remissionsspektren quantifiziert werden. Häufig ergibt sich durch den Einschluß des Azofarbstoffs im Molekularsieb auch eine deutliche Erhöhung der Brillanz.

Das Röntgendiffraktogramm der Einschlußverbindung zeigt in der Regel die Linien des ursprünglichen Molekularsiebs. Die exakte Lage und Intensität der Beugungslinien der Einschlußverbindung weichen häufig etwas von denen des unbehandelten Molekularsiebs ab, ein Effekt, der sich u.a. durch eine geringe Veränderung der Geometrie der Elementarzelle, verursacht durch die eingelagerten Farbstoff-Moleküle, erklärt.

Beugungslinien des reinen Farbstoffs treten in der Regel bei der Einschlußverbingung nicht auf, da der Farbstoff sich der Struktur des Molekularsiebs anpaßt und die Struktur des reinen festen Farbstoffs verliert.

Die chemische Analyse der Einschlußverbindungen ergeben einen Kohlenstoff-Gehalt von 0,1 bis 20 %, entsprechend dem Gehalt an Azofarbstoff.

Die thermische Stabilität der Einschlußverbindungen ließ sich durch thermogravimetrische Experimente quantifizieren. Während reiner Azofarbstoff sich häufig schon bei Temperaturen unter 200°C zersetzt oder sublimiert, bleibt das neue Material bis zu Temperaturen über 400°C unverändert fest; erst oberhalb 500°C zersetzt sich der in den Molekularsieb eingeschlossene Azofarbstoff.

Die erfindungsgemäßen Azofarbstoffe enthaltende kristalline Molekularsiebe eignen sich vorteilhaft als Farbmittel, wobei insbesondere die Anwendung als Pigmente zu nennen ist. Sie weisen dabei gute Gebrauchsechtheiten sowie hohe Brillanz und Temperaturstabilität auf. Weiterhin sind sie resistent gegenüber der Einwirkung von Lösungsmitteln.

Insbesondere ist die Verwendung der neuen Farbmittel zum Pigmentieren von Lacken, Kunststoffen, Keramiken oder Materialien, die über Sol-Gel-Produkte hergestellt werden, hervorzuheben.

Auch die Möglichkeit zur Speicherung von Information durch gezielte Modifikation des im Molekularsieb-Gerüst fixierten Farbstoffs ist gegeben. Durch die regelmäßige Anordnung der Hohlräume in den Molekularsieben müssen in den neuen Verbindungen auch die Moleküle der Azofarbstoffe regelmäßig angeordnet sein. Diese Anordnung kann eine starke Änderung der linearen und nichtlinearen optischen Eigenschaften hervorrufen (Angew. Chem. Band 96, (1984), 637-651), was die Anwendung des Materials als optisches Element möglich macht.

Weiterhin sind auch photochemische und katalytische Anwendungen des neuen Materials möglich.

Die Erfindung wird durch die folgenden Beispiele näher erläutert.

Die in den Beispielen verwendeten Azofarbstoffe werden im folgenden der Einfachheit halber mit den Buchstaben A bis U abgekürzt. Die Strukturformeln dieser Farbstoffe sind in Tabelle 1 zusammengestellt.

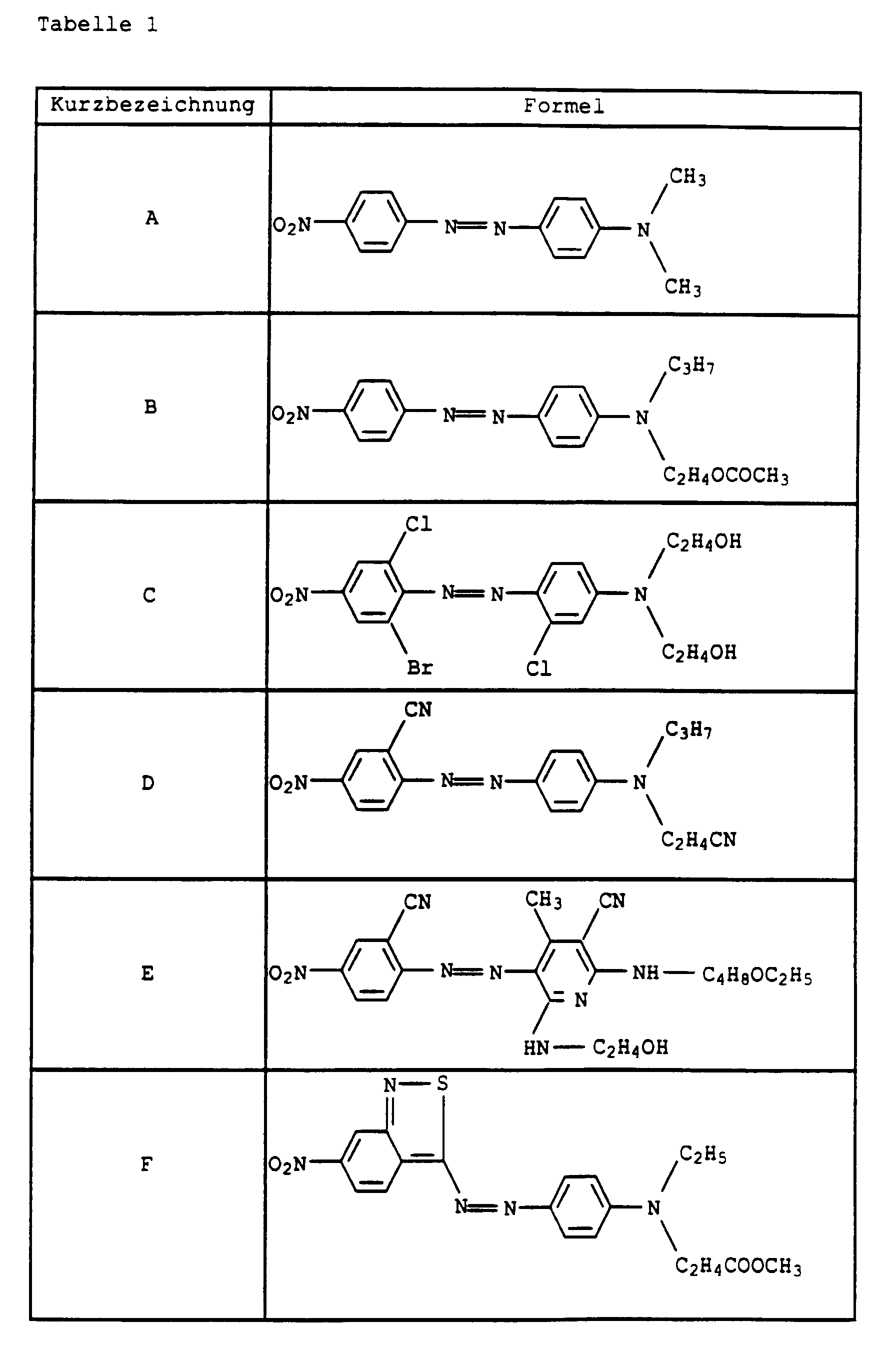

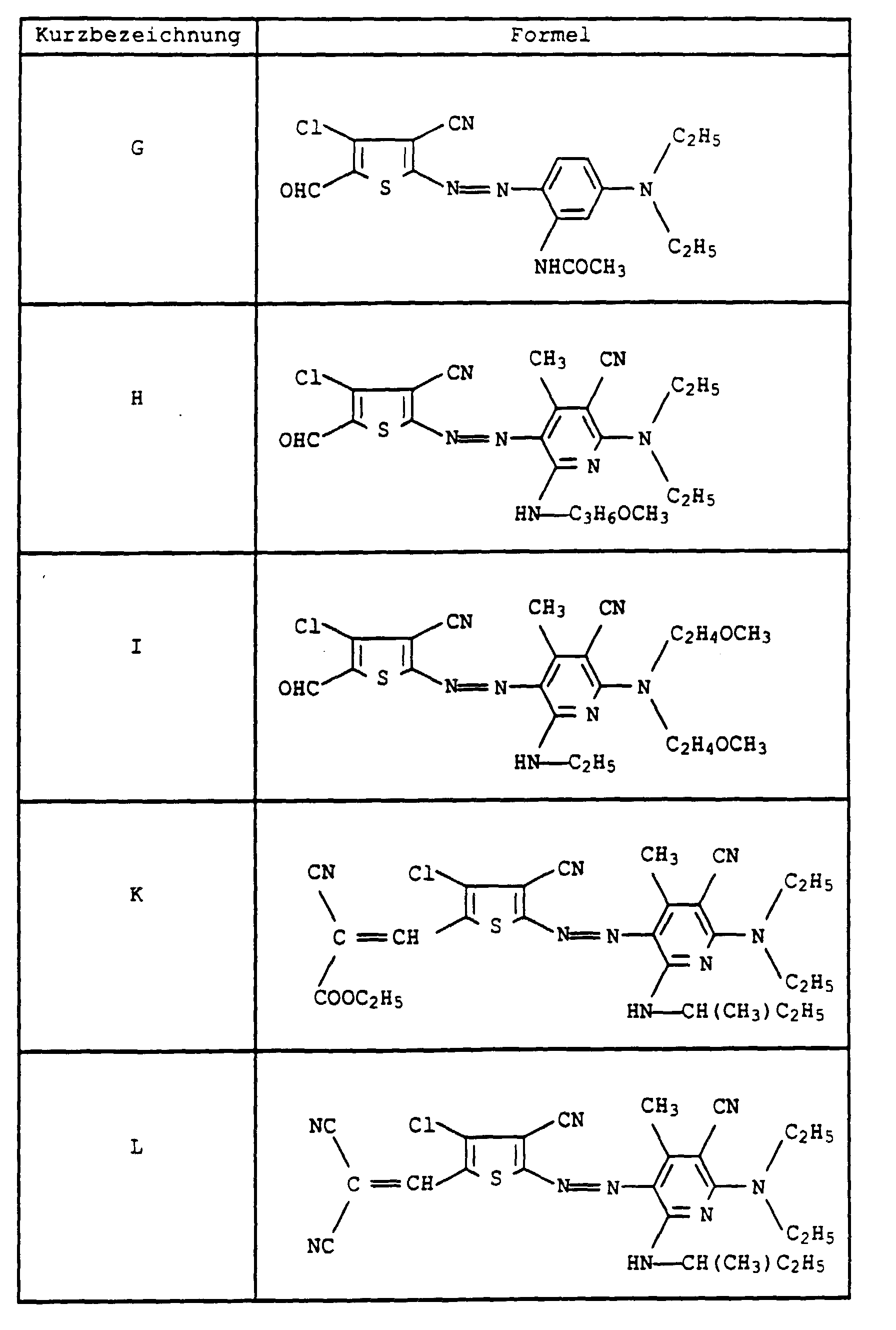

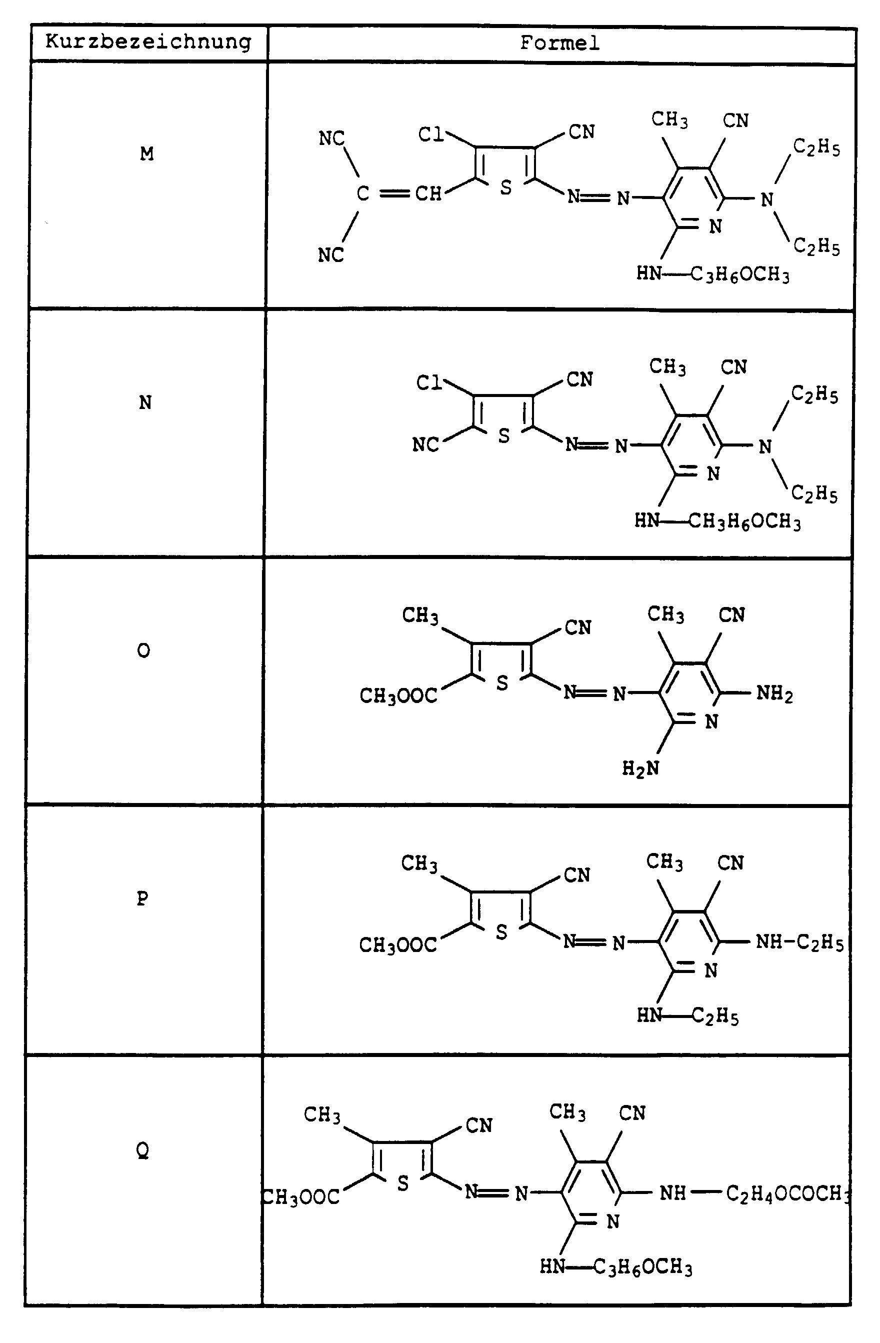

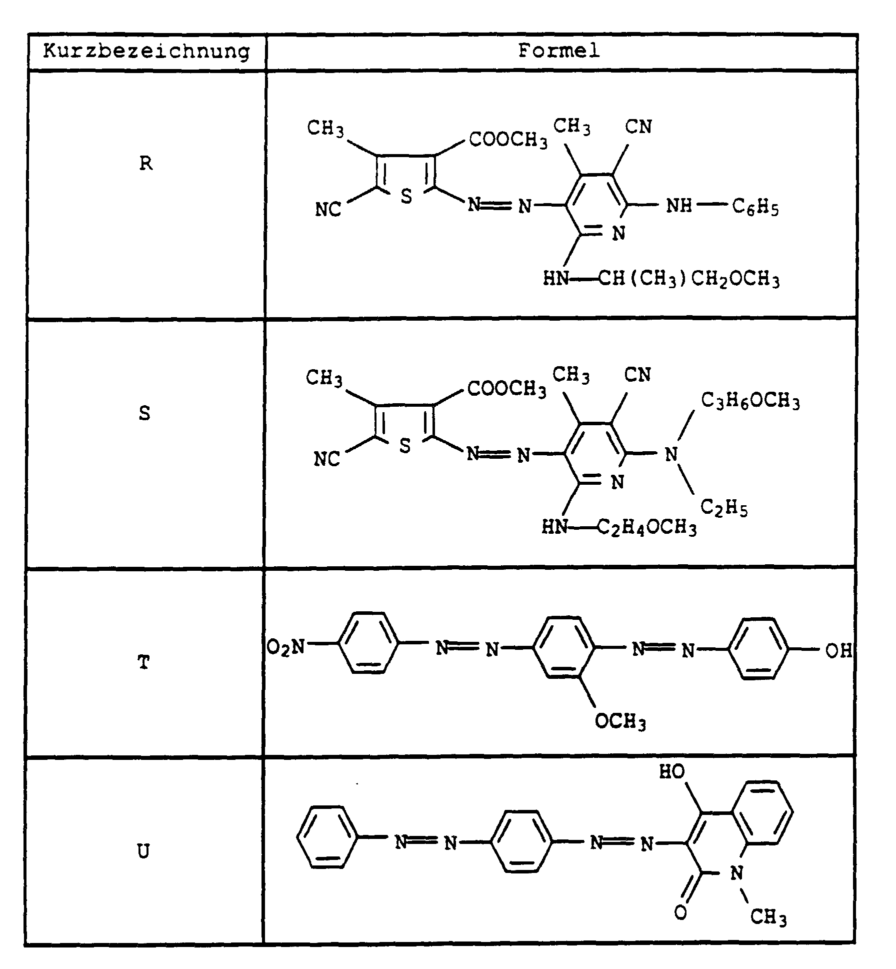

Die in den Beispielen verwendeten Molekularsiebe wurden entweder nach einer Literaturvorschrift selbst hergestellt oder sind kommerziell erhältlich. Herstellungsvorschrift oder Bezugsquelle der verwendeten Molekularsiebe sind neben deren Kurzbezeichnung in Tabelle 2 zusammen gestellt.

**Tabelle 2**

| Kurzbezeichnung | Name | Struktur (Zeolith-Atlas) | Quelle |
|---|---|---|---|
| I | AlPO₄-5 | AFI | Herstellung nach US-A- 4 310 440, Bsp. 7 |
| II | AlPO₄-11 | AEL | Herstellung nach US-A-4 310 440, Bsp. 32 |
| III | VPI-5 | VFI | Herstellung nach WO-A-89/01912 |
| IV | ZSM-5 | MFI | kommerziell erhältlich Fa. Uetikon |
| V | ZSM-11 | MEL | Herstellung nach US-A-3 709 979 |
| VI | ZSM-12 | MTW | Herstellung nach US-A-3 832 449 |
| VII | L-Zeolith | LTL | kommerziell erhältlich Fa. Bayer |
| VIII | US-Y-Zeolith | FAU | kommerziell erhältlich Fa. Grace |
| IX | Mordenit | MOR | kommerziell erhältlich Fa. P.Q. |

### Beispiel 1 bis 33

Allgemeine Herstellvorschrift für die Einlagerung aus der Gasphase

10 g frisch kalziniertes Molekularsieb werden mit 0,5 g Azofarbstoff gemischt und bei einem Druck von 1 mbar langsam erhitzt. Die Temperaturerhöhung geschieht mit einer Geschwindigkeit von 1°C/min. Beim Erreichen der Sublimationstemperatur des Azofarbstoffes wird die Temperatur für ca. 30 Minuten konstant gehalten. Dabei kann der Azofarbstoff in die Poren des Molekularsiebs sublimieren. Nach Beendigung des Sublimierens wird die Temperatur um weitere 10 bis 20 Grad auf die sogenannte Endtemperatur erhöht, um so überschüssigen Azofarbstoff oder Azofarbstoff, welcher sich an der äußeren Oberfläche des Molekularsiebs befindet, wegzusublimieren. Der wegsublimierende Farbstoff kann an einem Kühlfinger aufgefangen werden.

Die Einlagerungsverbindung wird zur Überprüfung ihrer Stabilität mehrmals mit siedendem Lösungsmittel, z. B. Aceton, Acetonitril oder Ethanol, behandelt. Alternativ dazu kann auch eine Soxhlet-Extraktion durchgeführt werden. Bei dieser Behandlung geht bei einer stabilen Einlagerungsverbindung praktisch kein Farbstoff aus dem Molekularsieb in das Lösungsmittel über.

In Tabelle 3 sind die Ergebnisse aufgeführt. Neben der Bezeichnung des Azofarbstoffs und des Molekularsiebs sind die Sublimationstemperatur, die Endtemperatur, die Farbe der Einlagerungsverbindung sowie spektrale Daten (λₘₐₓ-Wert des K/S-Spektrums) von Lackausfärbungen, hergestellt gemäß Beispiel 43 und 44, genannt.

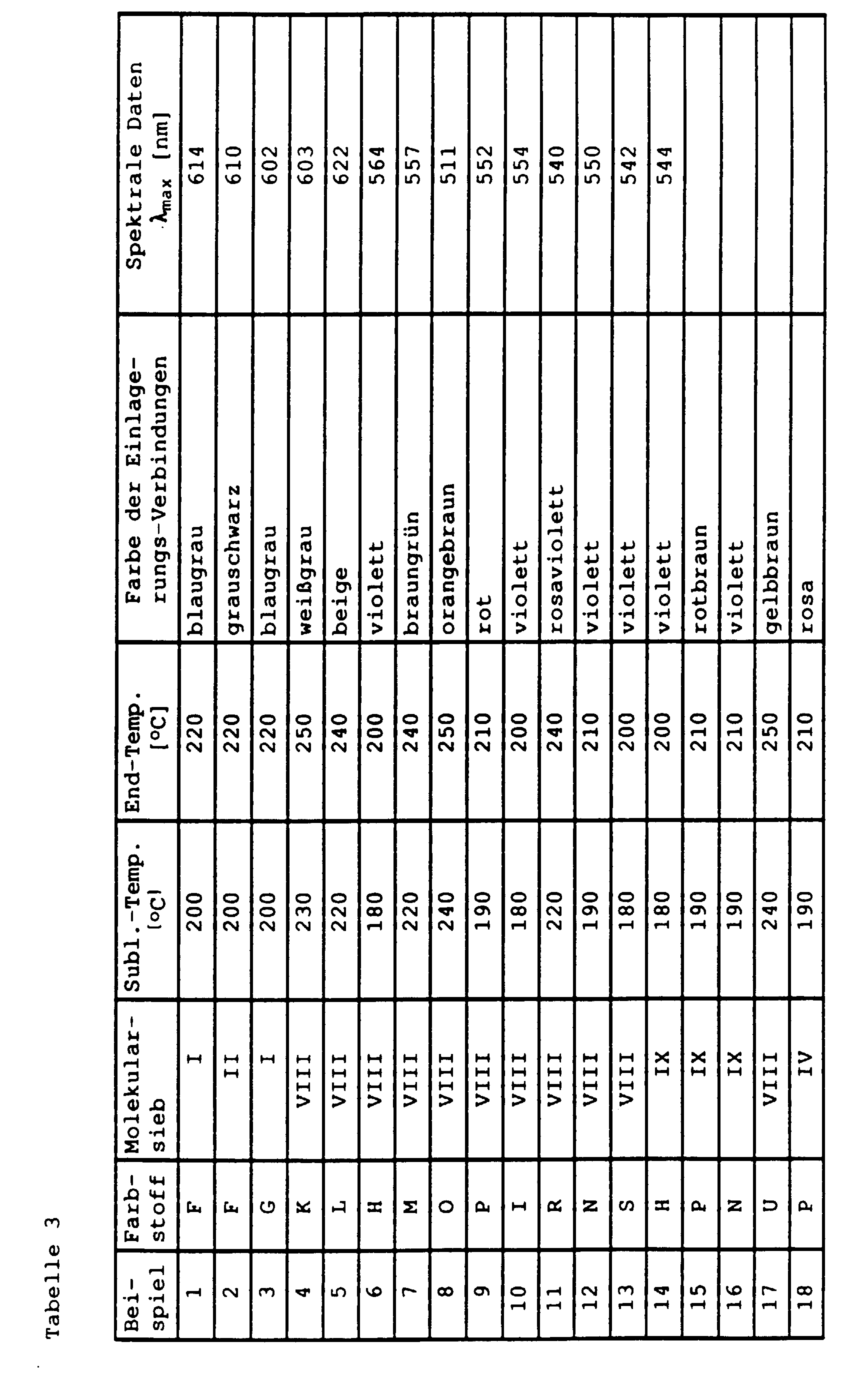

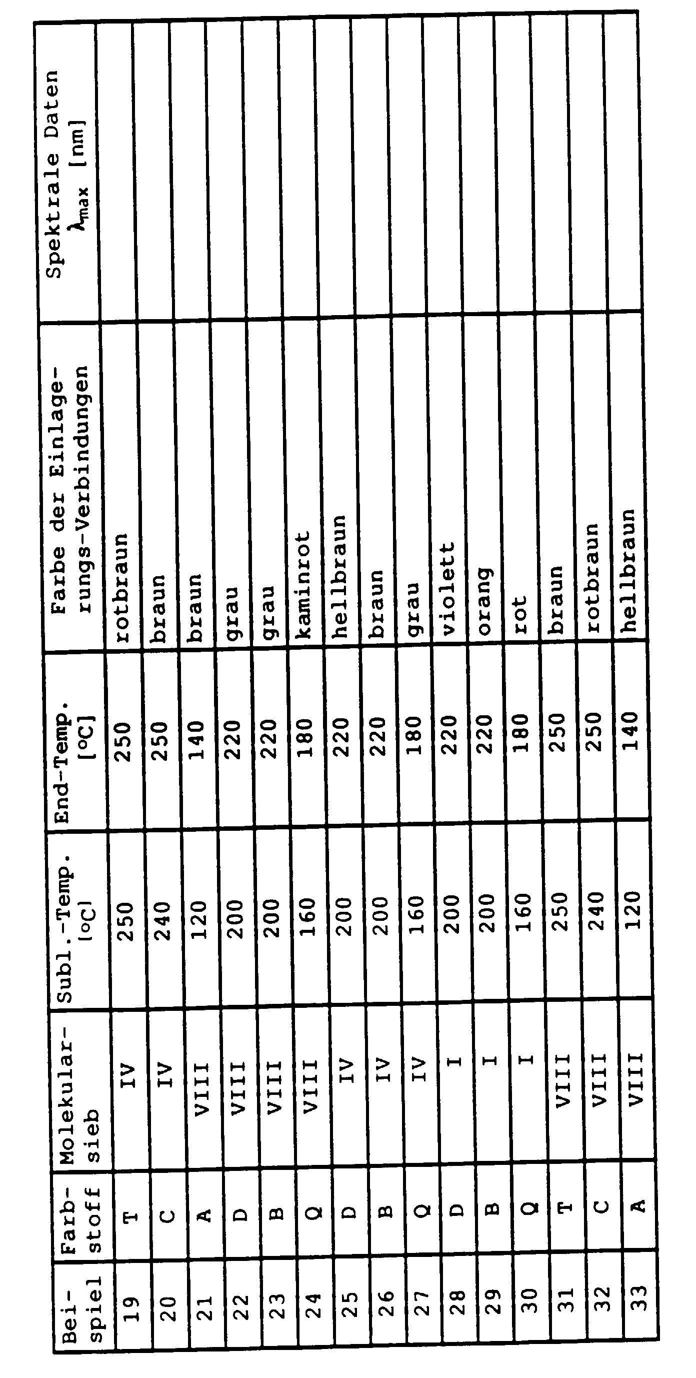

### Beispiel 34 bis 40

Allgemeine Herstellvorschrift für die Einlagerung aus der Lösung

10 g frisch kalziniertes Molekularsieb werden zu einer Lösung aus 0,5 g Azofarbstoff in 100 ml Lösungsmittel gegeben und 2 Stunden unter Rückfluß erhitzt.

Die farbige Einlagerungsverbindung wird abfiltriert und mehrmals mit reinem siedendem Lösungsmittel gewaschen, z.B. mit N,N-Dimethylformamid, N-Methylpyrrolidinon, Nitrobenzol, Trichlorbenzol, Xylol, Ethanol, Aceton, Tetrahydrofuran oder Acetonitril (Test auf Beständigkeit gegen Lösungsmittel). Alternativ dazu kann auch eine Soxhlet-Extraktion durchgeführt werden. Bei dieser Behandlung geht bei einer stabilen Einlagerungsverbindung praktisch kein Farbstoff aus dem Molekularsieb in das Lösungsmittel über.

In Tabelle 4 sind die Ergebnisse aufgeführt. Neben der Bezeichnung des Azofarbstoffs und des Molekularsiebs sind das verwendete Lösungsmittel, die Farbe der Einlagerungsverbindung sowie spektrale Daten (λₘₐₓ-Wert des K/S-Spektrums) von Lackausfärbungen, hergestellt gemäß Beispiel 43 und 44, genannt.

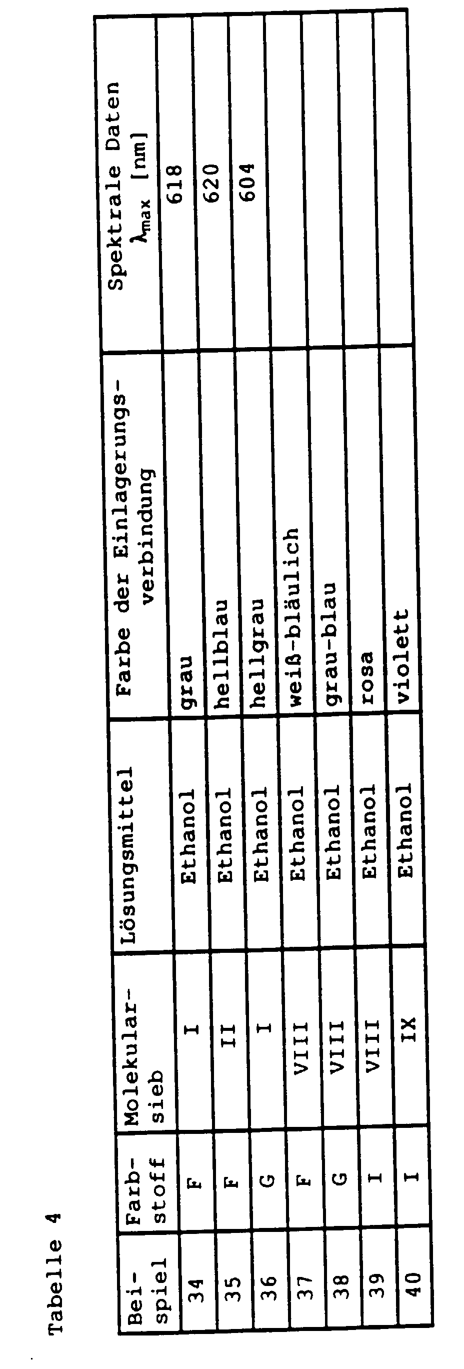

### Beispiel 41 und 42

Beispiel 41 und 42 veranschaulichen die Möglichkeit, einen Azofarbstoff direkt im Porensystem eines Molekularsiebs zu synthetisieren. 10 g eines Molekularsiebs werden mit einer ethanolischen Diazoniumsalzlösung ionenausgetauscht, anschließend mehrmals mit Ethanol gewaschen und getrocknet. Die Substanz ist leicht gelblich gefärbt. Durch Umsetzung des ionenausgetauschten Molekularsiebs mit einer geeigneten Kupplungskomponente, entsteht ein Azofarbstoff.

In Tabelle 5 sind die Ergebnisse aufgeführt. Neben der Bezeichnung des Diazoniumsalzes, des Molekularsiebs und der Kupplungskomponente sind das Lösungsmittel sowie die Farbe der Einlagerungsverbindung genannt.

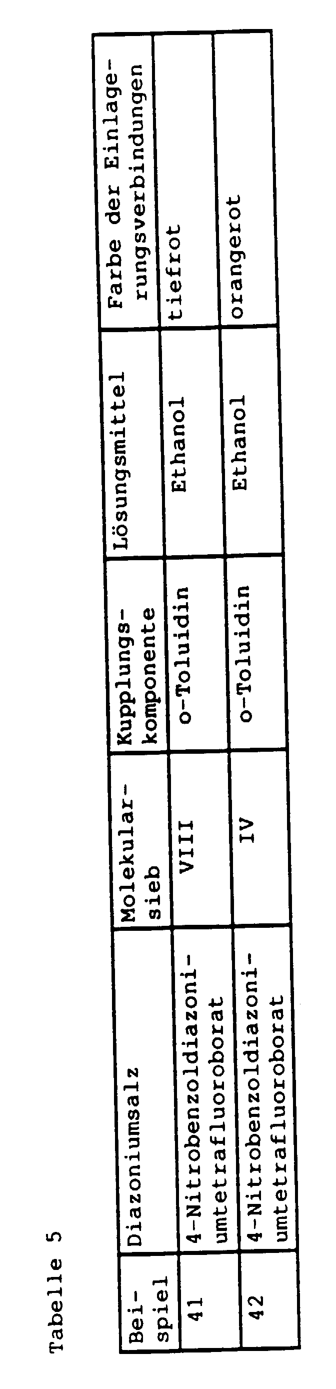

### Beispiel 43 (Anwendung)

Allgemeine Herstellvorschrift für einen Lackaufstrich

2,5 g Farbstoff enthaltendes Molekularsieb werden mit 47,5 g eines handelsüblichen Einbrennlacks auf Alkyd-Melamin-Basis gemischt. Dazu werden 50 ml Glaskugeln (Durchmesser: 3 bis 4 mm) hinzugefügt und das Gemisch 30 Minuten in einem handelsüblichen Mischer dispergiert.

Die resultierende Dispersion wird mit einer 150 µm Spiralrakel auf Kunstdruckpapier aufgebracht. Man ließ 20 Minuten ablüften, danach erfolgte das Einbrennen bei 130°C (10 Minuten).

### Beispiel 44 (Anwendung)

Die Herstellungsweise erfolgt analog Beispiel 43, jedoch wird vor dem Dispergieren mit 5 g eines Weißlacks, der einen Gehalt an TiO₂ von 25 Gew.-% aufweist, versetzt.

## Patentansprüche

1. Kristalline Molekularsiebe, die bis zu einer Temperatur von 500°C thermisch stabil sind, enthaltend einen oder mehrere Chromophore aus der Klasse der Mono- oder Polyazofarbstoffe, die keine sauren Gruppen aufweisen, mit der Maßgabe, daß wenn der Chromophor einen Monoazofarbstoff aus der Azobenzolreihe darstellt, solche Farbstoffe ausgenommen sind, deren Kupplungskomponente aus der Diphenylaminreihe stammt.

2. Kristalline Molekularsiebe nach Anspruch 1, enthaltend einen oder mehrere Monoazofarbstoffe.

3. Kristalline Molekularsiebe nach Anspruch 1, enthaltend einen oder mehrere Monoazofarbstoffe mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

4. Kristalline Molekularsiebe nach Anspruch 1, dadurch gekennzeichnet, daß die Molekularsiebe aus der Klasse der Zeolithe oder der Phosphate mit Zeolithstruktur stammen.

5. Verwendung der kristallinen Molekularsiebe gemäß Anspruch 1 als Farbmittel.

## Claims

1. Crystalline molecular sieves which are thermally stable up to a temperature of 500°C, containing one or several chromophores of the class of the mono or polyazo dyes and that have no acid groups; provided that if the chromophore is a monoazo dye ofthe family ofthe azobenzenes, the dyes whose coupling components are derived from the family of the diphenyl amines are excepted.

2. Crystalline molecular sieves according to claim 1, containing one or several monoazo dyes.

3. Crystalline molecular sieves according to claim 1, containing one or several monoazo dyes with one diazo component that is a derivative of an aniline or of a five-membered, aromatic, heterocyclic amine; this amine containing one to three heteroatoms belonging to a group consisting of nitrogen, oxygen and sulfur in the heterocyclic ring; and which can be annellated by a benzene, thiophene, pyridine or pyrimidine ring.

4. Crystalline molecular sieves according to claim 1 wherein said molecular sieves belong to the class of zeolites or that of phosphates with zeolite structure.

5. Application ofthe crystalline molecular sieves according to claim 1 as coloring agents.

## Revendications

1. Tamis moléculaires cristallins, stable thermiquement jusqu'à 500°C, contenant un ou plusieurs chromophores issu(s) de la classe des Mono- ou Poly-substituant azoïques, ne montrant pas de centre acide, si le chromophore est un substituant monoazoïques de la famille des azobenzenes, l'agent de copulation ne sera pas issu de la famille des diphenylamines.

2. Tamis moléculaires cristallins selon la revendication 1, contenant un ou plusieurs substituant(s) monoazoïque(s).

3. Tamis moléculaires cristallins selon la revendication 1, contenant un ou plusieurs substituant(s) monoazoïque(s) avec une seule liaison diazoïque, issu(s) de l'aniline ou d'une amine contenant un hétérocycle aromatique à cinq atomes, l'hétérocycle contenant un à trois hétéroatome(s), le ou les hétéroatome(s) provenant du groupe formé de azote, oxygène et soufre, l'hétérocycle pouvant aussi être associé à un autre cycle tel benzene, thiophene, pyridine ou pyrimidine.

4. Tamis moléculaires cristallins selon la revendication 1 caractérisés comme tamis moléculaires de type zéolithe ou de type phosphate à structure zéolithique.

5. Utilisation des tamis moléculaires cristallins selon la revendication 1 comme agent de coloration.
